# EUROPEAN PATENT SPECIFICATION

(11) **EP 3 294 099 B1**
(45) Date of publication and mention of the grant of the patent: **01.01.2020**
(21) Application number: 16745499.0
(22) Date of filing: 09.05.2016
(51) Int. Cl.: A47J 31/18, A47J 31/40, B65D 83/06, A47G 19/34

(54) **A DISPOSABLE CAPSULE CONTAINING COFFEE POWDER AND A SYSTEM FOR PREPARING TURKISH COFFEE**
WEGWERFBARE KAPSEL MIT KAFFEEPULVER UND SYSTEM ZUR HERSTELLUNG VON TÜRKISCHEM KAFFEE
CAPSULE JETABLE CONTENANT DE LA POUDRE DE CAFÉ ET SYSTÈME POUR PRÉPARER DU CAFÉ TURC

(30) Priority: 08.05.2015 IT PI20150036
(43) Date of publication of application: 21.03.2018
(60) Divisional application: 18207463.3
(73) Proprietor: Mac Design S.r.l., 55049 Viareggio (LU) (IT)
(72) Inventor: MACCIONI, Roberto, 55049 Viareggio (IT)
(74) Representative: Celestino, Marco
(86) International application number: PCT/IB2016/052641
(87) International publication number: WO 2016/181290

(56) References cited:
- WO-A1-2011/007266
- US-A- 6 145 705
- US-A1- 2015 060 481

## Description

### Field of the invention

The present invention relates to a disposable capsule configured to contain coffee powder, and to be used for preparing Turkish coffee by mixing the coffee powder with water.

Moreover, the invention relates to a device for releasing the coffee powder contained in said disposable capsule, in order to bring it into a Turkish coffee preparation container where the mixing with the water occurs.

### Background of the invention

Devices exist for preparing drinks starting from coffee powder, in particular for preparing Turkish coffee, see, for instance, EP2316312 or DE102006002511A1. Document US6145705A discloses a capsule according to the preamble of claim 1.

In particular, DE102006002511A1 describes a device for preparing Turkish coffee from coffee powder, comprising a housing configured to receive a disposable capsule filled with the coffee powder, the disposable capsule comprising a hollow body having first and second end portions opposite to each other, and an outlet mouth for the coffee powder at the first end portion; a frangible membrane arranged at the first end portion, forming a first closure member of the disposable capsule that blocks the outlet mouth; a second closure member at the second end portion. The device comprises a means for applying a push on the disposable capsule, said push directed from the second closure member towards the outlet mouth.

This device has the drawback that the second end is pressed, which causes the disposable capsule to collapse. For this reason:
- a part of the coffee powder is not discharged from the disposable capsule;
- the disposable capsule can contain only a relatively small amount of coffee powder, since it must have a curved surface, in order to be collapsed;
- by collapsing, the disposable capsule may break, which in turn causes capsule fragments to be lost, and possibly fall down along with the coffee powder.

### Summary of the invention

It is therefore a feature of the present invention to provide a disposable capsule arranged to contain coffee powder for preparing Turkish coffee, and a device for causing the coffee powder to be released, which solve the above-mentioned technical problems.

It is also a feature of the invention to provide such a device that is easy and cheap to be manufactured.

It is also a feature of the present invention to prevent the users and/or unauthorized people to freely re-fill the disposable capsule after use, which would occur out of any control, thus introducing a health risk for the consumers.

These and other objects are achieved by a single-dose disposable capsule according to claim 1.

In such a single-dose disposable capsule, a pressure exerted on the rotating portion through its surface exposed outside of the disposable capsule causes the rotating portion to rotate with respect to the fixed box portion from the closed position to the open position, the fixed box portion remaining blocked within the housing of the device. This makes it possible to remove the coffee powder easily from the disposable capsule, preventing the latter from being collapsed and reduced into fragments, which could otherwise be released into the Turkish coffee.

Moreover, such a single-dose disposable capsule is easy and cheap to be manufactured, and allows substantially the whole chamber to be filled with the coffee powder.

In an exemplary embodiment, the protrusion comprises a flange element, preferably arranged about an end portion of the fixed box portion, at the at least partially open face of the disposable capsule. In other words, the disposable capsule comprises a perimeter-protruding portion arranged to abut against an inner shoulder of a housing of a device for withdrawing, i.e. for causing the coffee powder of the chamber of the disposable capsule to be released.

In an exemplary embodiment, the disposable capsule comprises a removable element arranged to be removed from the disposable capsule under a thrust exerted in the same direction as the pressure exerted on the rotating portion to cause the coffee powder to be released, so that a recess is formed in said disposable capsule when the removable element is removed from the disposable capsule, the recess configured to serve as a signal of a previous use of the disposable capsule and to avoid any re-use of the disposable capsule. This way, a previously used capsule can be easily recognized by any sensor configured to recognize whether the removable portion is present or missing. In particular, by such a sensor a new disposable capsule signal and/or a used disposable capsule signal can be obtained, in order to enable and/or prevent a new/used container to be used/from being used in a Turkish coffee preparation operation. This avoids any uncontrolled filling of single-dose used capsules by people different from the disposable capsule producer.

For example, the removable element or insert can be made in a further flange element of the disposable capsule extending from the fixed box portion at a first radial portion thereof when the rotating portion of the disposable capsule is arranged in the closed position.

In an exemplary embodiment, the fixed box portion of the disposable capsule comprises an openable element arranged for sealing the at least partially open face of the fixed box portion, in particular the openable element is a frangible membrane element, in particular configured for breaking under a force exerted by the coffee powder on the membrane element, due to the pressure maintained on the push element of the rotating actuation portion.

In an exemplary embodiment, the rotating portion of the disposable capsule comprises a radial member that radially extends from the rotation axis towards an inner face of the fixed box portion, opposite to the rotation axis. The translation movement the radial member towards the outlet mouth causes a uniform displacement, i.e. a sort of "plug flow" of the whole amount of powder contained in the hollow body towards the outlet mouth, so that the disposable capsule is cleared from any significant residue of coffee powder. Moreover, the radial member can be manufactured so as to take up a minimum portion of the collection space within the hollow body, therefore the coffee powder takes up almost the whole capacity of the chamber.

In an exemplary embodiment, the rotating portion of the disposable capsule comprises at least one side member that extends from the radial member, parallel to a side surface of the fixed box portion, in particular it comprises a couple of such side members. This way, and in particular if two side members are provided, the food powder is prevented form coming into contact with the side walls of the fixed box portion. This reduces the frictional resistance opposed by the fixed box portion to the rotation of the rotating portion. Moreover, by this arrangement, it is less probable that even a small amount of coffee powder remains within the disposable capsule, which could occur due to a tightness failure between the movable member and the fixed box portion.

In an exemplary embodiment, at least one middle wall extends from said radial member, so as to divide the inside of said fixed box portion into at least two different chambers. This makes it possible to prepare beverages from two different powders that should be preferably be mixed only when they come into contact with the water. For instance, the two different powders may be coffee powder for Turkish coffee and sugar.

In an exemplary embodiment, the rotating portion of the disposable capsule comprises a cut element or cutting edge configured to push against and cut or tear the openable element, in particular the membrane, when a pressure is exerted on the rotating portion in order to cause the coffee powder to be released. This way, the openable element, in particular a membrane element, is easier to be opened. Moreover, the conditions required for opening the openable element, i.e. the required force, become more predictable. In facts, these conditions become independent from such uncertainty-introducing features of the membrane. One of these conditions is the thickness, which affects the tear strength of the membrane. Another of these conditions is the stability of the connection between the membrane and the fixed box portion of the disposable capsule, which is normally made by gluing or heat welding.

In particular, the cut element is integral to the side member or to the two side members. For instance, the cut element comprises an edge of the side member or of the side members, and has preferably a cutting profile or one or several cutting elements or in any case elements that are arranged to perforate or tear the membrane.

In an exemplary embodiment, the rotating portion of the disposable capsule comprises a container rotatably arranged in a tight engagement within the fixed box portion. For example, besides the above-mentioned first radial member, the rotating portion comprises a second radial member, which is arranged along with the first radial member and the side members, so as to define a movable recess in the fixed box portion. This way, the construction of the disposable capsule becomes remarkably easier, since the capsule is formed only by two assembled elements. Moreover, the filling of the capsule becomes easier, since it can take place after assembling the rotating portion and the fixed box portion, in particular, by a snap mounting system.

In an exemplary embodiment, the rotating portion comprises a closure member configured to seal the at least partially open face of the fixed box portion, wherein the closure member is arranged for sealing the at least partially open face when the rotating portion is located in the closed position.

In particular, the push surface is arranged at one end of a preferably arc-shaped push element extending from an extension side of the closure member laterally with respect to the fixed box portion.

In an exemplary embodiment, the fixed portion comprises a case having a fill opening and a cover configured to tightly block the fill opening. This way, the filling of the disposable capsule with the coffee powder becomes remarkably easier, since it can be carried out through an opening distinct from the opening through which the coffee powder is discharged to prepare Turkish coffee. In other words the filling can occur with the movable portion arranged in a closed position with respect to the fixed portion.

Preferably, the fill opening is made on a face of the case opposite to the at least partially open face of the fixed box portion of the disposable capsule, wherein the case and the cover comprise respective plane engagement elements that are mutually arranged to slide with respect to each other and that extend from one side of the at least partially open face, and the cover comprises a curved part slidingly engaged with the rotating portion of the disposable capsule. This fill opening makes it possible to stack the cases of a plurality of single-dose capsules before assembling them. This reduces the space required for storing the cases once they have been manufactured, preferably by thermoforming or by moulding, before assembling them with the other parts of the disposable capsule.

Advantageously, the case and the cover of the fixed portion comprise mutually-engaging snap-lock elements, for example holes made on the sliding engagement elements of the case or of the cover, and projections arranged for engaging with respective holes made on the sliding engagement elements of the cover or the case, respectively. This way, the fixed portion can be mounted by simply pressing the two components against each other, which allows the disposable capsule to be assembled in a very short time.

In an exemplary embodiment, the rotating portion is a cup and the chamber is completely defined within the cup, the cup having an opening with an edge at a predetermined distance from the rotation axis, and the disposable capsule comprises a membrane including a fixed frame portion stuck on a frame-fixing portion of the fixed box portion adjacent to a side of the edge, and also including a closure portion continuously stuck on that edge, so as to seal the cup.

The rotating cup portion has a rectangular or square cross section, for example, it may have a substantially parallelepiped or frustum-pyramidal shape. This assists fully filling the capsule with the coffee powder, since the whole volume of the rotating portion can be exploited.

The invention also relates to a system for preparing Turkish coffee according to claim 14.

With such a system, by simply rotating the rotatable actuator about its own further rotation axis, the push portion produces a pressure on the push surface of the rotating portion of the single-dose disposable capsule, moving the rotating portion from the closed position to the open position.

Advantageously, the disposable capsule comprises a removable element arranged to be removed from the disposable capsule under a thrust exerted in a direction of the force, so that a recess is formed in the disposable capsule when the removable element is removed, and
said device comprises a break tooth, for example located at the base of the manoeuvre portion of the rotatable actuator, and in any case arranged to apply the thrust on the removable element when the rotatable actuator is caused to rotate in order to open the removable element of the disposable capsule.

This makes it easier to recognize a single-use disposable capsule used as such by means of any suitable sensor, arranged to recognize whether the removable portion is present or missing. This avoids any uncontrolled filling of single-dose used capsules by people different from the disposable capsule producer.

The system can also comprise:
- a sensor, preferably integrated with the break tooth, configured to detect the presence/absence of the removable element in the disposable capsule and to generate an unused-capsule signal of the disposable capsule if the removable element is present;
- a logical means configured to receive the unused-capsule signal and to enable/disable a step of prosecution of making Turkish coffee in the presence/absence of the unused-capsule signal,
the device comprising a means for applying a push on the push surface of the rotating portion of the disposable capsule, said push directed from the push surface towards the at least partially open face of the fixed box portion.

It falls within the scope of the invention also the use of above-defined system in an existing apparatus for preparing Turkish coffee, in order to provide an advantageous retrofit solution for this apparatus.

The means for applying a push on the disposable capsule container, on the second closure member, are configured to cause the rotating portion to rotate within the fixed box portion, until it reaches the at least partially open face, so that the rotating portion allows the coffee powder to be discharged from the chamber defined by the fixed box portion and by the rotating portion through the at least partially open face of the fixed box portion of the disposable capsule.

### Brief description of the drawings

The invention will be now shown with the description of an exemplary embodiment thereof, exemplifying but not limitative, with reference to the attached drawings, in which:
- Figs. 1-3 are diagrammatical sectional views of a disposable capsule and of a device for opening it according to the invention, when preparing Turkish coffee from a coffee powder contained in the disposable capsule;
- Fig. 4 is a perspective view of a disposable capsule according to a first exemplary embodiment of the invention, in which the rotating portion is in the closed position;
- Fig. 5 is a perspective view of a disposable capsule of the type shown in Fig. 4, comprising an element removable by a thrust, in order to recognize a used disposable capsule;
- Figs. 6 and 7 are perspective views of the fixed box portion and of the rotating portion, respectively, of the disposable capsule of Fig. 5;
- Figs. 8 and 9 are a perspective view and a sectional view, respectively, of the disposable capsule of Fig. 5, with the rotating portion in the open position, after releasing the coffee powder;
- Fig. 10 is a perspective view of a disposable capsule according to a second exemplary embodiment, with the rotating portion in the closed position;
- Fig. 11 is a perspective view of a disposable capsule of the type shown in Fig. 10, equipped with a thrust-removable element for recognizing a used disposable capsule;
- Figs. 12 and 13 are perspective views of the fixed box portion and of the rotating portion, respectively, of the disposable capsule of Fig. 11;
- Figs. 14 and 15 are a perspective view and a sectional view, respectively, of the disposable capsule of Fig. 11, with the rotating portion in the open position, after releasing the coffee powder;
- Fig. 16 is a perspective view of a disposable capsule according to a third exemplary embodiment, with the rotating portion in the closed position;
- Fig. 17 is a perspective view of a disposable capsule of the type shown in Fig. 16, equipped with an element removable by a thrust for recognizing a used disposable capsule;
- Figs. 18 and 19 are perspective views of the fixed box portion and of the rotating portion, respectively, of the disposable capsule of Fig. 17;
- Figs. 20 and 21 are a perspective view and a sectional view, respectively, of the disposable capsule of Fig. 11, with the rotating portion in the open position, after releasing the coffee powder;
- Fig. 22 is a perspective view of a device for opening a disposable capsule according to Figs. 1-21, in order to cause the food powder contained therein to be released;
- Fig. 23 is a perspective view of the rotatable actuator of the device of Fig. 22;
- Fig. 24 is a cross sectional view of the device of Fig. 22 with the disposable capsule according to Figs. 17-21 after releasing the coffee powder, during a step of extracting the disposable capsule from the device;
- Fig. 25 is a perspective view of the device of Fig. 22 with a disposable capsule according to Figs. 1-21 in a configuration before releasing the coffee powder;
- Fig. 26 is a cross sectional view of the device and of the disposable capsule in the configuration of Fig. 25;
- Fig. 27 is a cross sectional view of the device for opening the disposable capsule of Figs. 25 and 26 during a step of opening and releasing the coffee powder;
- Fig. 28 is a partial cross sectional view of the device for opening the disposable capsule of Figs. 25, 26 and 27 after opening the disposable capsule;
- Fig. 29 is a perspective view of the device of Fig. 22, with the rotating portion turned according to the open position of the disposed capsule;
- Fig. 30 is a perspective view of a disposable capsule according to a fourth exemplary embodiment, with the rotating portion in the closed position;
- Fig. 31 is a perspective view of the disposable capsule of Fig. 30, with the rotating portion in an open position;
- Fig. 32 is a partially sectional perspective view of a device for opening the disposable capsule of Figs. 30 and 31, with the disposable capsule arranged in a configuration before releasing the coffee powder;
- Figs. 33 and 34 are perspective views of the fixed box portion and of the rotating portion, respectively, of the disposable capsule of the type shown in Figs. 30 and 31, equipped with an element removable by a thrust for recognizing a used disposable capsule;
- Fig. 35 is a perspective view of the rotatable actuator of the device of Fig. 32;
- Fig. 36 is a partially sectional perspective view of the device and of the disposable capsule of Fig. 32, with the rotating portion of the disposable capsule turned in the open position;
- Fig. 37 is a perspective view of a modification of the disposable capsule of Figs. 16-21, with the rotating portion in the open position, comprising two different chambers for two different food powders;
- Figs. 38 and 39 are perspective views of the fixed box portion and of the rotating portion, respectively, of the disposable capsule of Fig. 37;
- Fig. 40 is a perspective view of a disposable capsule according to a fifth exemplary embodiment, in which the fixed part comprises a case including a filling opening and a corresponding fluid-tight cover, with the rotating portion in the closed position;
- Fig. 41 is a sectional perspective view of the disposable capsule shown in Fig. 40;
- Figs. 42, 43 and 44 are perspective views of the cover, of the case and of the rotating portion, respectively, of the disposable capsule of Figs. 40 and 41;
- Figs. 45-47 are sectional perspective views of a disposable capsule according to a sixth exemplary embodiment, in which the rotating portion has a discharge opening of the fixed part sealed by a removable membrane , with the rotating portion in the closed position, in a partially open position and in the open position, respectively;
- Fig. 48 is a perspective bottom view of the disposable capsule of Figs. 45-47, with the rotating portion in a partially open position.

### Detailed description of exemplary embodiments of the invention

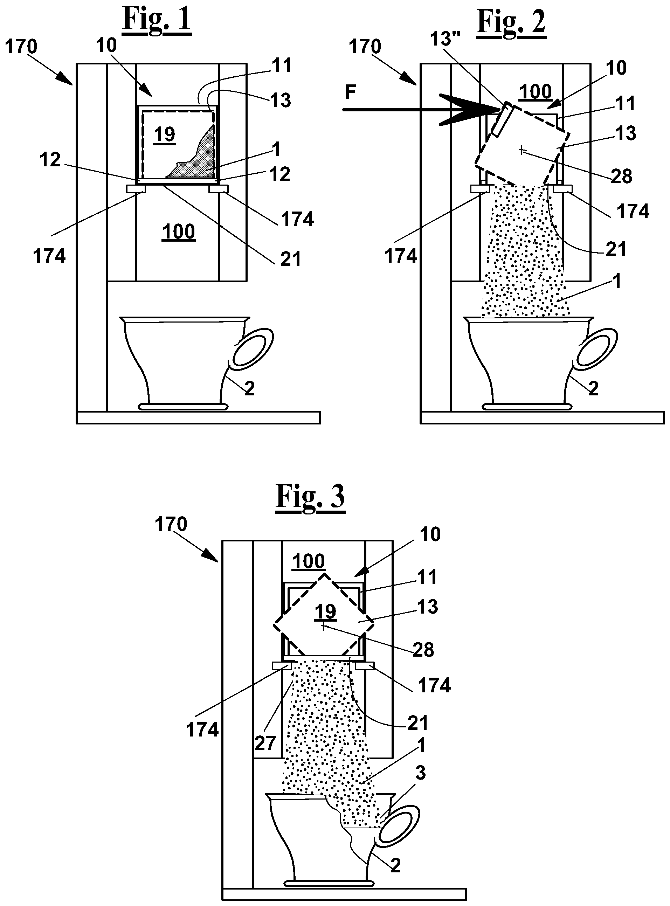

With reference to Figs. 1-3, a disposable capsule container or disposable capsule 10 is described for a coffee powder 1 that can be used for preparing an amount of Turkish coffee, starting from coffee powder 1. The coffee powder must be brought into a preparation container 2 for Turkish coffee 3.

Disposable capsule 10 comprises a fixed box portion 11 with an at least partially open face 21 and a rotating portion 13, which is arranged to carry out a rotation about a rotation axis 28 with respect to fixed box portion 11. Fixed box portion 11 and rotating element 13 are made of a material that is suitable for coming into contact with food, preferably a plastic material.

Fixed box portion 11 and rotating portion 13 are mounted to each other so as to define a chamber 19 available for coffee powder 1, as shown in Fig. 1 in a partially sectioned view. Moreover, rotating portion 13 has a push surface 13" exposed outside of fixed box portion 11, and is arranged to move, during its rotation, from a closed position (Fig. 1) of disposable capsule 10, in which chamber 19 is closed, to an open position (Fig. 3) of disposable capsule 10, in which chamber 19 has an opening 27 toward the outside of disposable capsule 10 at at least partially open face 21 of fixed box portion 11.

According to the invention, a protrusion 12 of the fixed box portion extends from an outer surface thereof, and is configured to engage with an abutment 174 of a housing 100 of a device 170 for opening disposable capsule 10, said housing configured to receive fixed box portion 11.

As shown in Figs. 1-3, if a force F is applied on push surface 13" of rotating portion 13, rotating portion 13 can rotate with respect to fixed box portion 11 from the closed position to the open position, while fixed box portion 11 remains motionless within housing 100, which allows coffee powder 1 to fall from chamber 19 of disposable capsule 10, more precisely through at least partially open face 21 of fixed box portion 11.

As shown more in detail in the subsequent pictures, disposable capsule 10 can also comprise a removable element that is arranged to be removed under a thrust exerted against it, in particular, in a device for opening disposable capsule 10 and for causing the coffee powder contained therein to be released.

Device 170 can also comprise a sensor configured to detect the presence/absence of such a removable element in disposable capsule 10, and to generate an unused-capsule signal of the same, if the removable element is present, as well as a logical means configured to receive the unused-capsule signal and to enable/disable a step of prosecution of making Turkish coffee if the unused-capsule signal is present/missing. For example, a machine for preparing Turkish coffee can be configured so that, if the unused-capsule signal is not present, such steps cannot occur as heating and/or stirring the mixture of coffee powder and water discharged into preparation container 2.

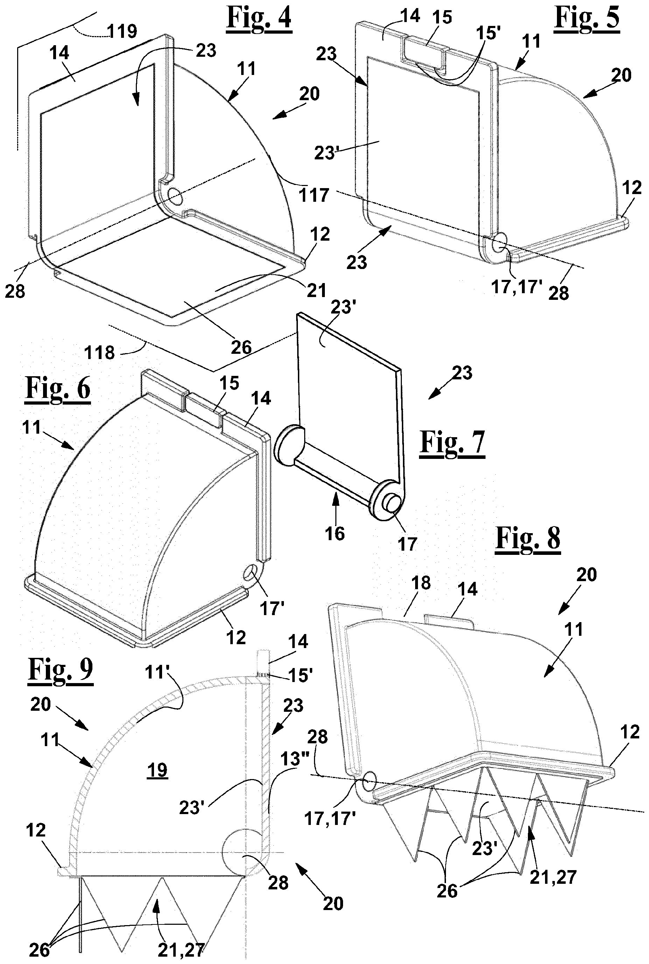

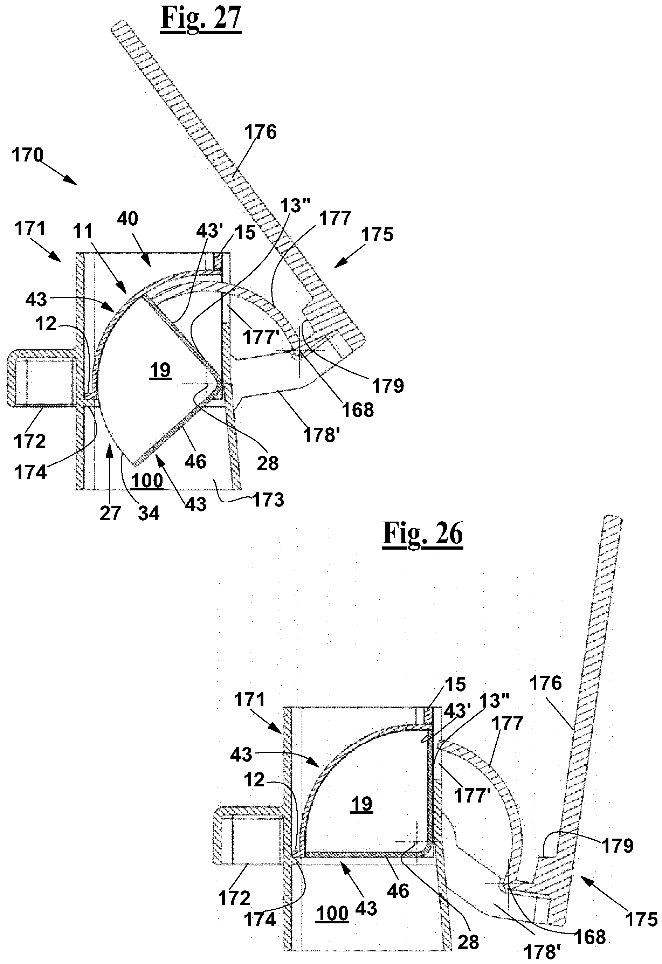

With reference to Figs. 4-9, a single-dose disposable capsule 20 containing coffee powder is described according to a first exemplary embodiment of the invention. In disposable capsule 20, fixed box portion 11 has the shape of a portion of a circular-cross section cylinder limited by a cylindrical surface 117 and by two planes 118,119 passing through the axis of cylindrical surface 117, not shown. In the preferred exemplary embodiment of Fig. 4, planes 118,119 are perpendicular to each other but, more in general, they can form solid angles of a different measure. Fixed box portion 11 comprises a flange element 12 such as a protrusion configured to engage with an abutment 174 of housing 100 of device 170 for opening, for example, disposable capsule 20, as shown in Fig. 26. In this case, flange portion 12 is arranged at plane 118. Optionally, as shown still in Fig. 4, a further flange element 14 at plane 119 can be provided.

Rotating portion 23 and fixed box portion 11 are preferably mounted to each other in a snap-lock engagement.

Fig. 5 shows a modification of disposable capsule 20 in which a removable element 15 is provided, such as an insert, which is preferably made in further flange element 14 and is arranged to be removed under a thrust exerted against it. For example, removable element 15 can be connected to the rest of flange element 14 through at least one weakened connection portion 15', which can be broken by such a thrust. Once removable element 15 has been removed, a recess 18 is formed, as shown in Fig. 8.

Fixed box portion 11 comprises an openable element 26, arranged so as to seal at least partially open face 21. For example, the openable element can be a membrane element or a film frangible element 26, preferably of aluminium, fixed to the edges of an opening face 21 by a conventional technique.

As shown in Figs. 7 and 9, rotating portion 23 of disposable capsule 20 comprises a radial member 23' extending from rotation axis 28 towards or up to an inner face 11' of fixed box portion 11 opposite to axis 28, in this case up an inner face 11' of cylindrical surface 117.

In particular, radial member 23' has a cross section equal to a cross section of fixed box portion 11, apart from a gap required to allow a movable portion 23 to slide within fixed box portion 11.

Radial member 23' has a connection portion 16 (Fig. 7), configured to pivotally engage in a housing 17' (Figs. 5 and 6) of fixed box portion 11, for example connection portion 16 can comprise a pin 17 configured to engage with a hole 17', wherein pin 17 and hole 17' are made at rotation axis 28 of rotating portion 23 with respect to fixed box portion 11. Radial member 23' has an outer face 13" that provides the push surface of rotating portion 23.

As shown in Figs. 8 and 9, as a consequence of a push, i.e. a pressure exerted on push surface 13", and by rotating radial member 23' about its rotation axis 28 accordingly, radial member 23' pushes in turn the coffee powder contained in chamber 19 against openable element 26 and causes the latter to be opened, in particular it causes membrane element 26 to break, which allows the coffee powder to come out from disposable capsule 20 through opening 27 of at least partially open face 21.

In an embodiment, not shown, membrane closure member 26 has some notches, which preferably converge to a same point, typically to a central portion of membrane element 26, in so that the latter is easier to break when a pressure is applied to push surface 13".

Moreover, as more precisely described hereinafter, when rotating portion 23 is removed from the closed position (Figs. 4 and 5) by the push, i.e. when rotating portion 23 is brought to the open position (Figs. 8 and 9), removable element 15 is removed and recess 18 is formed at its place.

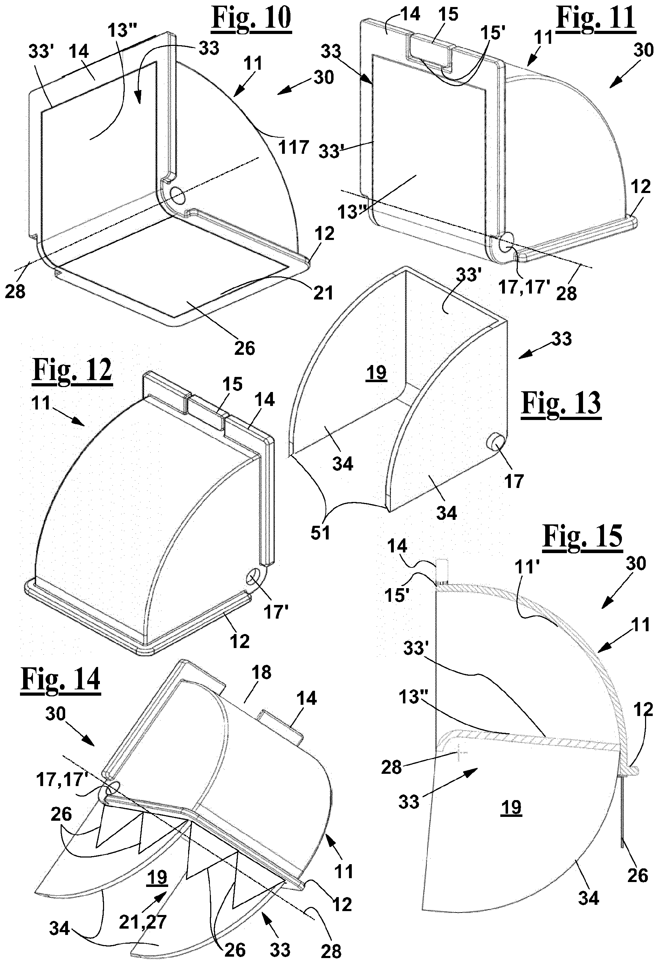

With reference to Figs. 10-15, a disposable capsule 30 is described according to a second exemplary embodiment. Disposable capsule 30 differs from disposable capsule 20 of Figs. 4-9 in that rotating portion 33 also comprises a couple of side members 34 that extend from radial member 33' of rotating portion 33 parallel to a respective side surface of fixed box portion 11. In an embodiment, not shown, rotating portion 33 comprises only one side member 34.

In the embodiment of Fig. 13, rotating portion 33 of disposable capsule 30 optionally comprises cut elements 51 for cutting, i.e. tearing openable element 26 when a pressure is applied on push surface 13" of rotating portion 33, which is provided, even in this case, by a surface of radial member 33' facing outside of disposable capsule 30. Still in the embodiment of Fig. 13, each cut element 51 is integral to a respective side member 34, more in particular, each cut element 51 is made at an edge of a respective side member 34 that has a cutting profile portion or that is in any case configured to cut or tear membrane 26. In an embodiment, not shown, however, an integral cut element can be provided that extends between radial member 33' of rotating portion 33 and a position at a distance from side members 34. Obviously, cut elements can be provided even if side members 34 are not present, as in a modification of disposable capsule 20 of Figs. 4-9.

Also in this case, in a modification of disposable capsule 30 shown in Figs. 11, 13, 14 and 15, a removable element 15 is provided that is arranged to be removed under a thrust exerted against it and to leave a recess 18 at its own place once it has been removed.

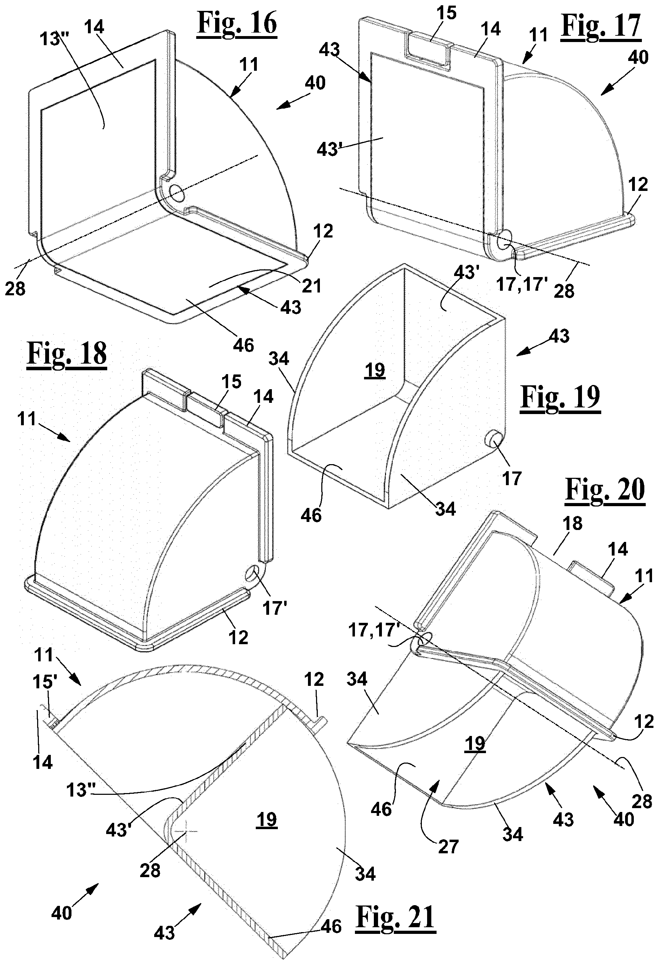

With reference to Figs. 16-21, a disposable capsule 40 is described according to a third exemplary embodiment. Disposable capsule 40 differs from disposable capsule 30 of Figs. 10-15 in that rotating portion 43 also comprises a second radial member 46, which defines, along with first and second radial members 43',46 and two side members 34, a movable chamber or recess within fixed box portion 11. More in detail, second radial member 46, in the open position of rotating element 43, is arranged at at least partially open face 21 of fixed box portion 11. In particular, a sealing means is provided between first and second radial members 43',46 and the faces of fixed box-like element 11 at planes 118,119.

Also in this case, fixed box portion 11 and rotating portion 43 can be mounted to each other in a snap-lock engagement. The disposable capsule can be filled, once mounted, by arranging it in the open position, at an angle of 45° with respect to the horizontal, and with fixed box portion 11 facing downwards.

Once it has been filled, disposable capsule 40 can be closed by causing rotating portion 43 to rotate until it attains the closed position. Preferably, snap-lock elements are provided, not shown, in order to maintain capsule 40 in the closed position. Optionally, protection films can be provided at radial members 43',46 in order to seal disposable capsule 40.

As shown in Figs. 20, 21, 27, 28, if a push, i.e. a pressure, is exerted on push surface 13", so that rotating portion 43 rotates about rotation axis 28, fixed box portion 11 gradually protrudes through at least partially open face 21, i.e. chamber or recess 19 is increasingly opened, which causes the coffee powder contained therein to come out, in particular, to fall.

Also in this case, in a modification of disposable capsule 40 as shown in Figs. 17, 19, 20 and 21, a removable element 15 is provided that is arranged to be removed under the effect of a thrust exerted against it, and to leave a recess 18 at its place after once it has been removed.

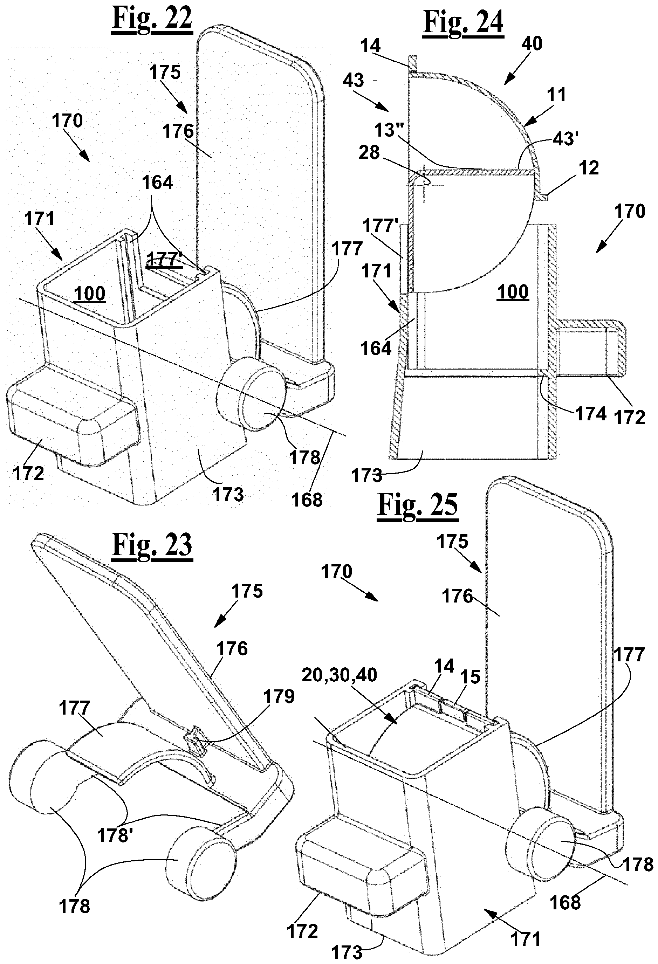

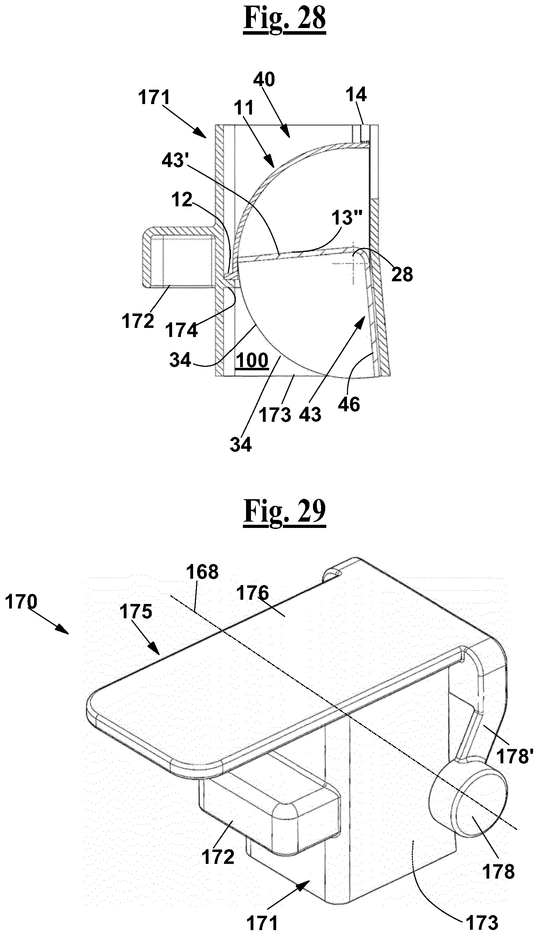

Figs. 22 and 29 show a device 170 for opening disposable capsule 20,30,40 of Figs. 4-21, in order to cause food powder 1 contained therein to be released to prepare Turkish coffee. Device 170 comprises a box 171 with a discharge opening 173 for coffee powder 1, and with an actuator 175, rotatably arranged with respect to box 171 about a further rotation axis 168. Box 171 defines a housing 100, which in this case has the shape of a substantially prismatic duct, and is preferably equipped with a fastening element to fix it to a support, not shown, in order to arrange device 170 with its housing or duct 100 in a substantially vertical position, and with discharge opening 173 facing downwards. A handle 172 can be provided to assist device 170 to be introduced into and extracted from the support.

As shown in Figs. 25 and 26, box 171 is configured to rotatably receive disposable capsule 20,30,40 into its own housing 100. Moreover, box 171 comprises an abutment 174 arranged within housing 100 and configured to abut against protrusion 12 of box-like portion 11 in such a way that protrusion 12 rests upon abutment 174 by gravity. As an alternative, reversible snap-lock devices can be provided between disposable capsule 20,30,40 and the inside of housing 100. In the embodiment shown in Figs. 22, 25 and 26, longitudinal guides 164 are provided that are configured to slidingly receive such elements as side portions of flange 14 of disposable capsule 20,30,40, in order to assist the disposable capsule to be correctly positioned, i.e. correctly oriented, within housing 100. More in detail, flange 14 of fixed box portion 11 provides vertical guides, which have a shape different from the perimeter edge present on the lower face, so as to prevent any introduction in a wrong position.

In an exemplary embodiment, rotatable actuator 175, shown more in detail in Fig. 23, can comprise a manoeuvre portion 176 and a push portion 177 integral to each other. In particular, manoeuvre portion 176 extends along a plane and is configured to be manually pushed against box 171 by a user, in order to cause rotatable actuator 175 to turn about its own rotation axis 168. Box 171 of device 170 has a passageway 177' for push portion 177 (Figs. 22,27), so that the latter can push against surface 13" of rotating portion 43 of disposable capsule 40 or, although not shown, against push surface 13" of rotating portion 23,33 of disposable capsule 20,30, respectively (Figs. 4-15).

This way, as shown in Figs. 26-28, rotatable actuator 175 rotates about its rotation axis 168, and at the same time it causes rotating portion 43 of disposable capsule 40 to rotate about its rotation axis 28, from the closed position of Fig. 26 to the open position of Fig. 28 through a condition of partial opening as shown in Fig. 27.

In the embodiment of Figs. 23, 26 and 27, device 170 comprises a removal means 179 for removing removable element 15 from disposable capsule 20 when being used. This removal means can comprise a break tooth 179, which is preferably made as a stiffening rib of the lever or of manoeuvre portion 176, and which is arranged for thrusting removable element 15 of fixed box portion 11 of single-dose capsules 20,30,40 of Figs. 5, 11, 17 when rotatable actuator 175 is caused to rotate. In this case, break tooth 179 thrusts removable element 15 of disposable capsule 40, for example by breaking weakened connection portions 15' connecting it to the rest of disposable capsule 40, for instance to a flange portion 14 thereof, and forming a recess 18 at removable element 15, while insert 15 is collected within housing 100.

Device 170 can comprise a sensor, not shown, which is arranged to detect the presence of removable element 15, i.e. an integrity sensor of disposable capsule 10. The integrity sensor may have the shape of a key that protrudes from rotatable actuator 175, that is arranged to be compressed during the rotation of rotatable actuator 175, and that is configured to generate an electric presence/absence signal of removable element 15. A logical means of the device, not shown, is configured to receive and to process the presence/absence signal.

In particular, if the integrity of disposable capsule 10 is detected, the logical means of device 170 can provide a permission signal to the water supply means for delivering water to the Turkish coffee preparation container, in a subsequent step of the Turkish coffee preparation process. In the opposite case, this permission signal is not generated, or a signal is generated that indicates a previous use of disposable capsule 10, in order to prevent it to be re-used.

In particular, the integrity sensor can be integrated with break tooth 179. More in detail, break tooth 179 can have a central hole, not shown, through which the push button protrudes, which is configured to apply a reaction force to removable element 15 not strong enough to remove it, when rotatable actuator 175 is rotating.

Subsequently, removable element 15 of the disposable capsule comes into contact with break tooth 179, which causes it to be the removed, leaving in the disposable capsule a lack of material, i.e. recess 18, where removable element 15 was arranged.

Fig. 24 shows disposable capsule 40 after its use, in an extraction step of disposable capsule 40 from device 170, where disposable capsule 40 engages an upper opening of fixed box-like portion 171 that had been previously used to introduce the capsule into housing 100.

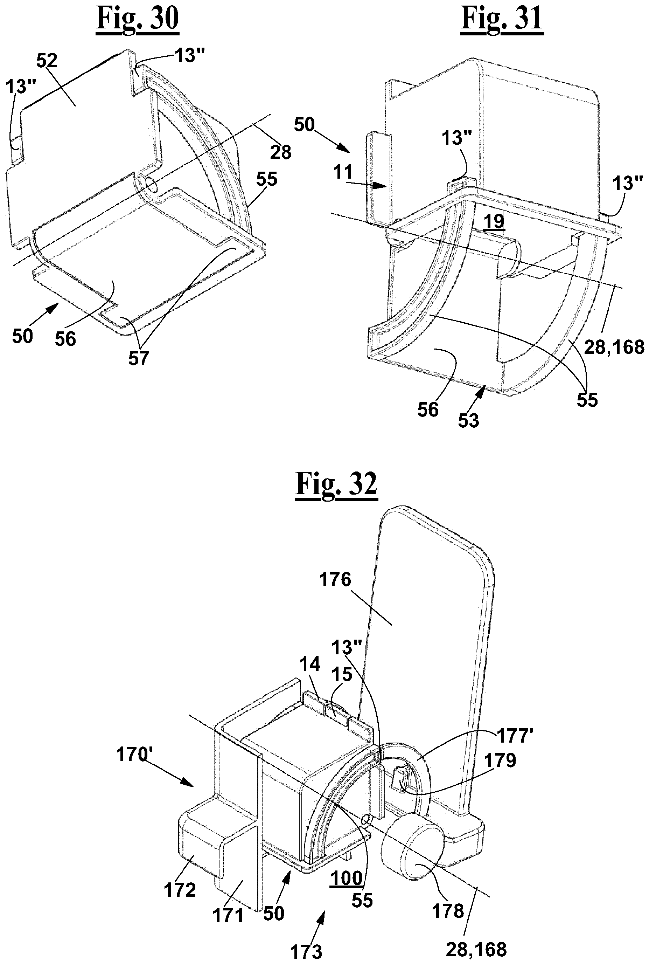

With reference to Figs. 30-36, a disposable capsule 50 is described according to a fourth exemplary embodiment. In this case, fixed box portion 11 has a substantially cubical shape, whose longitudinal cross section, i.e. in a plane perpendicular to rotation axis 28, is substantially square. However, the fixed box portion of the device according to the fourth exemplary embodiment, or its longitudinal cross section, can also have a different shape.

Rotating portion 53 of disposable capsule 50 comprises a fixed closure member 52 and a door closure member 56 configured to seal at least partially open face 21 of fixed box portion 11, when rotating portion 53 is at the closed position (Figs. 30 and 32).

In disposable capsule 50, closure member 56 comprises two side extensions 57 arranged at opposite sides with respect to fixed box portion 11, from which respective push elements 55 extend adjacent to the side faces of fixed box portion 11. In this case, push elements 55 have a shape of an arc of circumference, more in detail, they have the shape of a sector of an annulus. The end portion of each push element 55 opposite to respective extension side 57 exposes a surface configured as push surface 13";

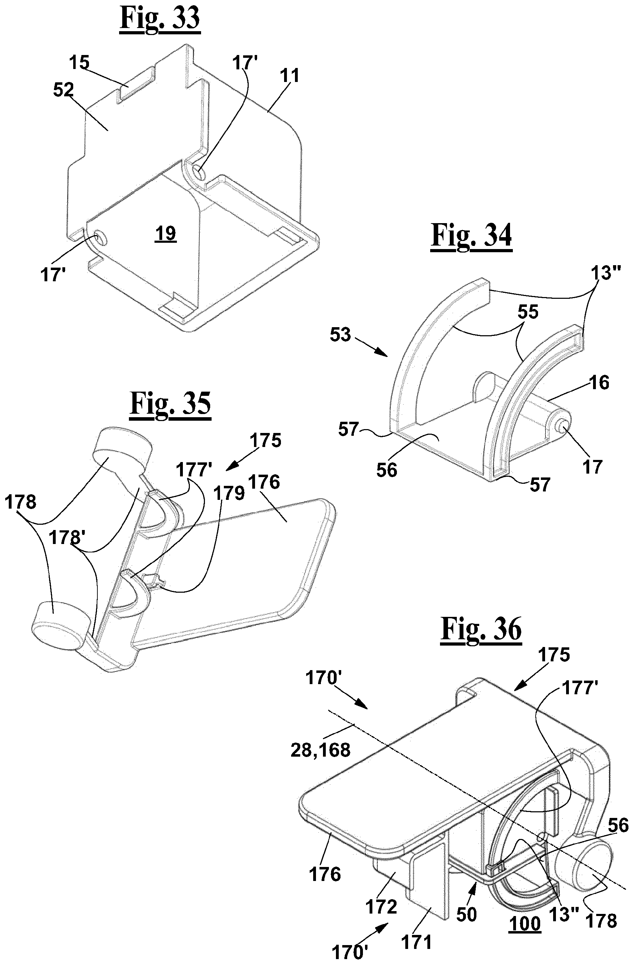

Figs. 32 and 36 show a device 170' for opening disposable capsule 50 of Figs. 30, 31, 33, 34, to cause food powder 1 contained therein to be released to prepare Turkish coffee. Device 170' differs from device 170 of Fig. 22 in that it has two push portions 177' in its own movable actuator 175, configured to come into contact with two respective push surfaces 13", and in that no passageway is provided for these push portions 177'.

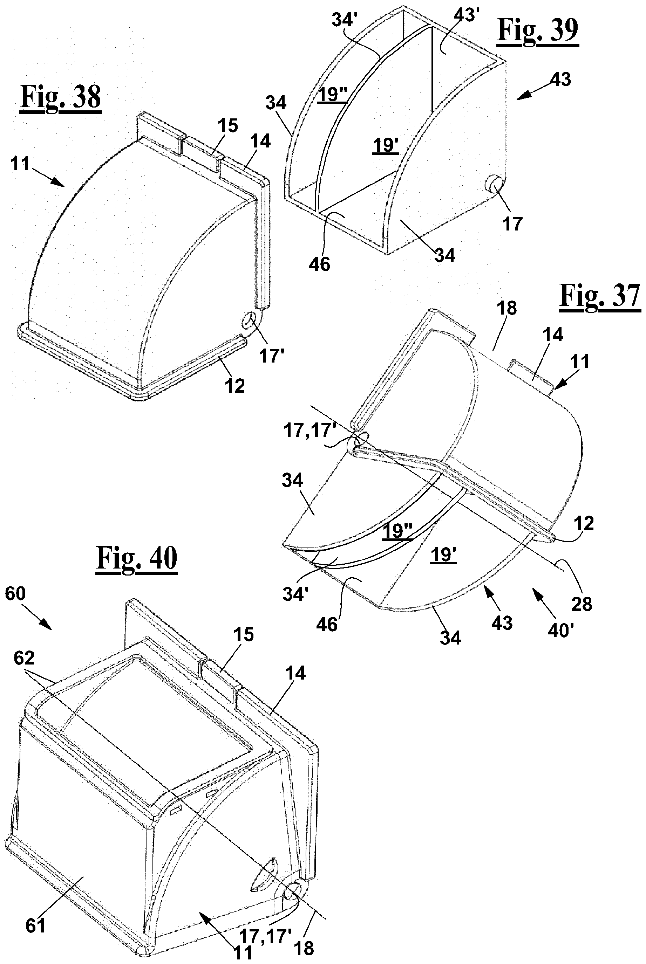

Figg. 37-39 show a disposable capsule 40' that is a modification of disposable capsule 40 according to the third embodiment of Figs. 16-21, in which a wall 34' extends from radial member 43', so as to divide the room within fixed box portion 11 into two distinct chambers 19' and 19" for two different food powders. In particular, wall 34' is arranged parallel to side members 34 of rotating portion 43 of disposable capsule 40' and divides the room within rotating portion 43. This modification is useful to prepare drinks starting from two different powders that must not be mixed before coming into contact with water. Figs. 38 and 39 show the fixed box portion and the rotating portion, respectively, of disposable capsule 40' of Fig. 37.

In Figs. 37-39, a modification is shown of disposable capsule of Figs. 16-21 only, which is modified by middle wall 34', however also the single-dose capsules according to the other exemplary embodiments can be modified this way, in a manner that is obvious for a skilled person.

Figs. 40-44 show a disposable capsule 60 according to a fifth exemplary embodiment of the invention, in which fixed portion 11 comprises a case 61 having a fill opening 64 and a cover 62 configured to tightly block fill opening 64. In the shown embodiment, fill opening 64 is made on a face of case 61 opposite to at least partially open face 21 of fixed box portion 11, but it could be made also somewhere else, for example in side walls 61' of case 61. In the shown embodiment, case 61 and cover 62 comprise respective mutually sliding plane engagement elements 61',62';61",62", substantially consisting of portions of their side walls, which extend from one side of at least partially open face 21 of the disposable capsule, once the later has been mounted. Preferably, cover 62 comprises a curved part 62'" that slidingly engages with rotating portion 63. Case 61 and cover 62 comprise mutually engaging snap-lock elements, which in the shown embodiment consists of holes 66 made on sliding engagement elements 61' of case 61 and of projections 67 protruding from lateral sliding engagement elements 62' of the cover and arranged for engaging with respective holes 66, respectively. The relative position of holes 66 and of projections 67 could also be opposite with respect to the picture.

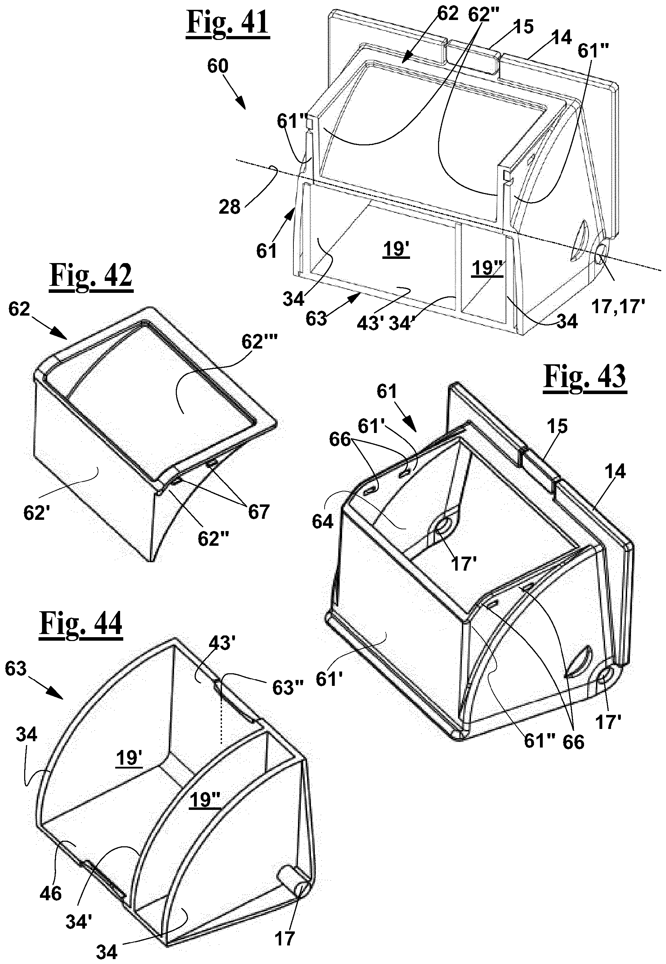

In Fig. 44 a disposable capsule according to a modification of the above embodiment is shown, in which a wall 34' extends from radial member 43', so as to divide the room within fixed box portion 11 into two distinct chambers 19' and 19" for two different food powder. In particular, wall 34' is arranged parallel to side members 34 of rotating portion 63 of disposable capsule 60 dividing the room within rotating portion 63. This modified embodiment is useful to prepare drinks starting from two different powders that must not be mixed before coming into contact with water.

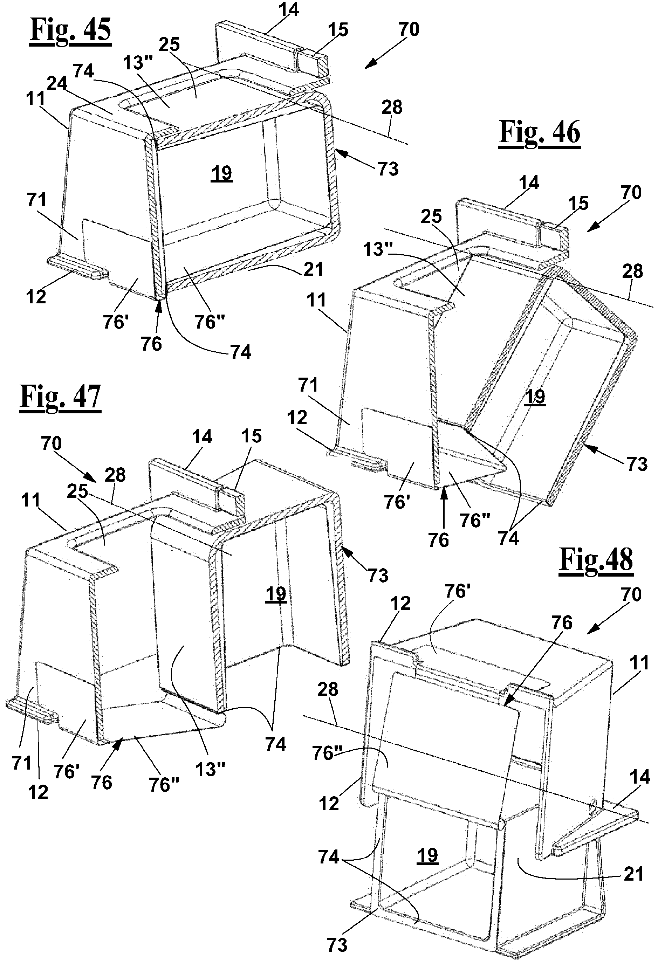

Figs. 45-48 show a disposable capsule 70 according to a sixth exemplary embodiment of the invention, in which rotating portion 73 is a cup and chamber 19 is fully defined within this cup. Cup 73 has an opening defined by an edge 74 that is arranged at a predetermined distance from rotation axis 28. Disposable capsule 70 comprises a membrane 76 that has an own fixed frame portion 76' stuck on a frame-fixing portion 71 of fixed box portion 11 adjacent to a side of edge 74, and an own closure portion 76", adjacent to fixed frame portion 76', continuously stuck on edge 74, so as to seal cup 73.

Rotating cup portion 73 has a rectangular or square cross section, for example, it can have a substantially parallelepiped or frustum-pyramidal shape. Fixed box portion 11 can have the same shape as cup potion 73. Protrusion 12 of fixed box portion 11, in this case a flange element 12, is adjacent to a first opening 23 made at a base of fixed box portion 11, through which the rotating portion can pass, by rotating about its axis 28 (Figs. 46,47). Fixed box portion 11 has a second opening 25 in a base 24 opposite to opening 21, so that rotating portion 73 exposes push portion 13" out of capsule 70, on which an actuator of an opening device, not shown, can act.

Due to the rotation of rotating portion 73 about axis 28, closure portion 76" of membrane 76 is progressively detached from edge 74 of rotating portion 73 to allow the coffee powder, not shown, to be released, provided the adhesion force between fixed frame portion 76' and frame-fixing portion 71 of fixed box portion 11 is stronger than the adhesion force between closure portion 76" and edge 74. In order to properly discharge coffee powder 1, an opening device, not shown, is configured to receive disposable capsule 70 arranged so that protrusion 12 and first opening 23, face downwards, and are preferably arranged horizontally.

According to a modification of the sixth exemplary embodiment, removable element 15 can be provided. For example, removable element 15 can be an insert, preferably made in a further flange element 14, and is arranged to be removed under a thrust exerted against it when the capsule is used, as already described with reference to Fig. 5.

The foregoing description of exemplary specific embodiments of the disposable capsule and of the device according to the invention, and of its mode of use, will so fully reveal the invention according to the conceptual point of view, so that others, by applying current knowledge, will be able to modify and/or adapt for various applications these embodiments without further researches and without parting from the invention. Therefore, it is to be understood that such adaptations and modifications will have to be considered as equivalent of the specific embodiments. The means and the materials to provide the various functions described herein could have a different nature without, for this reason, departing from the scope of the invention, as defined by the claims. It is meant that the phraseology or terminology employed herein is for the purpose of description and, for this reason, not of limitation.

## Claims

1. A single-dose coffee disposable capsule (10,20,30,40,40',50,60,70), for preparing Turkish coffee (3) in a Turkish coffee (3) supply device (170,170') configured for releasing the coffee powder contained in said disposable capsule, in order to bring it into a Turkish coffee preparation container (2) where the mixing with the water occurs, said capsule containing said coffee powder (1) and comprising:
- a fixed box portion (11) having an at least partially open face (21); **characterized in that** it further comprises:
- a rotating portion (13,23,33,43,53,63,73) rotatably arranged by a pin (17) about a rotation axis (28) with respect to said fixed box portion (11),
wherein said fixed box portion (11) and said rotating portion (13,23,33,43,53,63,73) are mounted to each other for defining a chamber (19) of said coffee powder (1),
wherein said rotating portion (13,23,33,43,53,63,73) has a push surface (13") exposed outside of said fixed box portion (11),
wherein said rotating portion (13,23,33,43,53,63,73) is arranged in such a way to move:
- from a closed position, at which said chamber (19) is closed;
- to an open position, at which said chamber (19) forms an opening (27) toward the outside of said coffee disposable capsule (10,20,30,40,40',50,60,70) at said at least partially open face (21) of said fixed box portion (11),
wherein a protrusion (12) extends from an outer surface of said fixed box portion, said protrusion configured to engage with an abutment (174) of a housing (100) of said device (170,170') configured to receive said fixed box portion (11), in such a way that a pressure exerted on said rotating portion (13,23,33,43,53,63,73) through said push surface (13") causes said rotating portion (13,23,33,43,53,63,73) to rotate with respect to said fixed box portion (11) from said closed position to said open position, said fixed box portion (11) remaining blocked within said housing (100).

2. The disposable capsule (10,20,30,40,40',50,60,70) according to claim 1, wherein said protrusion comprises a flange element (12).

3. The disposable capsule (10,20,30,40,40',50,60,70) according to claim 2, wherein said flange element (12) is arranged about an end portion (11") of said fixed box portion (11) at said at least partially open face (21) of said disposable capsule (10,20,30,40,40',50,60,70).

4. The disposable capsule (10,20,30,40,40',50,60,70) according to claim 1, comprising a removable element (15) arranged to be removed from said disposable capsule (10,20,30,40,40',50,60,70) under a thrust exerted in the same direction as said pressure, so that a recess (18) is formed in said disposable capsule (10,20,30,40,40',50,60,70) when said removable element (15) is removed from said disposable capsule (10,20,30,40,40',50,60,70), said recess (18) configured to serve as a signal of a previous use of said disposable capsule (10,20,30,40,40',50,60,70) and to avoid any re-use of said disposable capsule (10,20,30,40,40',50,60,70).

5. The disposable capsule (10,20,30,40,40',50,60,70) according to claim 4, wherein said removable element (15) is made in a further flange element (14) of said disposable capsule (10,20,30,40,40',50,60,70) extending from said fixed box portion (11) at a first radial portion (13',23',33',43',53') when said rotating portion (13,23,33,43,53,63,73) is arranged in said closed position.

6. The disposable capsule (20,30,60) according to claim 1, wherein said fixed box portion (11) comprises an openable element (26), in particular a frangible membrane element (26), arranged to seal said at least partially open face (21) of said fixed box portion (11).

7. The disposable capsule (20,30,40,40',60) according to claim 1, wherein said rotating portion (23,33,43,63) comprises a member selected from the group consisting of:
- a radial member (23',33',43') extending from said rotation axis (28) to an inner face (11') of said fixed box portion (11) opposite to the rotation axis (28);
- at least one side member (34) extending from said radial member (33',43'), in particular two side members (34), parallel to a side surface of said fixed box portion (11);
- a combination of said radial member (43') and of said side member or members (43).
in particular, a middle wall (34') extends from said radial member (43'), so as to divide the inside of said fixed box portion (11) into two distinct chambers (19',19").
in particular, said rotating portion (33) comprises a cut element (51) configured to push against and cut said openable element (26) when said pressure is exerted on said rotating portion (33).
in particular, said cut element (51) is integral to the at least one side member (34).

8. The disposable capsule (40,40',60) according to claim 1, wherein said rotating portion comprises a container (43,63) rotatably arranged in a tight engagement within said fixed box portion (11).

9. The disposable capsule (40,40',60) according to claim 7, wherein said radial member of said rotating portion (43,63) is a first radial member (43') and
said rotating portion (43) comprises two said side members (34), and said rotating portion (43) comprises a second radial member (46),
said first and said second radial members (43',46) and said two side members (34) define a rotatable chamber within said fixed box portion (11).

10. The disposable capsule (50) according to claim 1, wherein said rotating portion (53) comprises a closure member (56) configured to seal said at least partially open face (21) of said fixed box portion (11), wherein said closure member (56) is arranged for sealing said at least partially open face (21) when said rotating portion is in said closed position.

11. The disposable capsule (50) according to claim 10, wherein said push surface (13") is arranged at one end of a push element (55) that extends from an extension side (57) of said closure member (56) laterally with respect to said fixed box portion (11).

12. The disposable capsule (60) according to claim 1, wherein said fixed box portion (11) comprises a case (61) having a fill opening (64) and a cover (62) configured to tightly block said fill opening (64).
in particular, said fill opening (64) is made on a face of said case (61) opposite to said at least partially open face (21) of said fixed box portion (11), wherein said case (61) and said cover (62) comprise respective plane engagement elements (61',62';61",62") that are mutually arranged to slide with respect to each other and that extend from one side of said at least partially open face (21), and said cover (62) comprises a curved part (62"') slidingly engaged with said rotating portion (63).
in particular, said case (61) and said cover (62) comprise mutually engaging snap-lock elements (66,67).

13. The disposable capsule (70) according to claim 1, wherein
said rotating portion (73) is a cup and said chamber (19) is completely defined within said cup (73), said cup (74) having an opening with an edge (74) at a predetermined distance from said rotation axis (28), and said disposable capsule (70) comprises a membrane (76) including:
- a fixed frame portion (76') stuck on a frame-fixing portion (71) of said fixed box portion (11) adjacent to a side of said edge (74), and
- a closure portion (76") continuously stuck on said edge (74), so as to seal said cup (73).

14. A system for preparing Turkish coffee (3), comprising:
- a single-dose coffee disposable capsule (10,20,30,40,40',50,60,70), configured for preparing Turkish coffee (3), said capsule containing coffee powder (1) and said capsule comprising:
- a fixed box portion (11) having an at least partially open face (21);
said system further comprising
- a device (170,170') configured for releasing the coffee powder contained in said disposable capsule, in order to bring it into a Turkish coffee preparation container (2) where the mixing with the water occurs by opening the disposable capsule (10,20,30,40,40',50,60,70), comprising:
- a box (171) having a discharge opening (173) for said coffee powder (1);
said system being **characterized in that** said capsule further comprises
- a rotating portion (13,23,33,43,53,63,73) rotatably arranged by a pin (17) about a rotation axis (28) with respect to said fixed box portion (11),
wherein said fixed box portion (11) and said rotating portion (13,23,33,43,53,63,73) are mounted to each other for defining a chamber (19) of said coffee powder (1),
wherein said rotating portion (13,23,33,43,53,63,73) has a push surface (13") exposed outside of said fixed box portion (11),
wherein said rotating portion (13,23,33,43,53,63,73) is arranged in such a way to move:
- from a closed position, at which said chamber (19) is closed,
- to an open position, at which said chamber (19) forms an opening (27) toward the outside of said coffee disposable capsule (10,20,30,40,40',50,60,70) at said at least partially open face (21) of said fixed box portion (11),
**and in that** said device further comprises
- a rotatable actuator (175) rotatably arranged with respect to said box (171) and comprising a manoeuvre portion (176) outside of said box (171) and a push portion (177) within said box, integral to each other,
wherein said box (171) is configured to receive said disposable capsule (10,20,30,40,40',50,60,70) with said rotation axis (28) integral to said box (171),
wherein **said** capsule and said device comprise a mutual engagement means for engaging said capsule inside of said box, said mutual engagement means comprising:
- a protrusion (12) protruding from an outer surface of said fixed box portion (11) of said disposable capsule (10,20,30,40,40',50);
- an abutment (174) within said box (171), configured to engage with said protrusion (12), so as to keep said disposable capsule motionless within said box (171) with respect to a feeding direction,
in such a way that a force exerted on said rotating portion (13,23,33,43,53,63,73) through said manoeuvre portion (176) and said push portion (177), and through said push surface (13"), causes said rotating portion (13,23,33,43,53,63,73) to rotate with respect to said fixed box portion (11) from said closed position to said open position, said fixed box portion (11) remaining blocked in a position within said box (171).

15. A system according to claim 14, wherein:
- said disposable capsule comprises a removable element (15) arranged to be removed from said disposable capsule (10,20,30,40,40',50,60,70) under a thrust exerted in a direction of said force, so that a recess (18) is formed in said disposable capsule (10,20,30,40,40',50,60,70) when said removable element (15) is removed, and
- said device (170,170') comprises a break tooth (179) arranged to apply said thrust on said removable element (15) when said rotatable actuator (175) is caused to rotate in order to open said removable element (15) from said disposable capsule (10,20,30,40,40',50),
comprising furthermore:
- a sensor (53) configured to detect the presence/absence of said removable element (15) in said disposable capsule (10,20,30,40,40',50,60,70) and to generate a unused-capsule signal of said disposable capsule (10,20,30,40,40',50,60,70) if said removable element (15) is present;
- a logical means (54) configured to receive said unused-capsule signal and to enable/disable a step of prosecution of said preparation of said Turkish coffee (3) in presence/absence of said unused-capsule signal.

## Patentansprüche

1. Einzeldosis-Einwegkapsel (10,20,30,40,40',50,60,70), zur Zubereitung von türkischem Kaffee (3) in einer Zuführvorrichtung (170,170') für türkischen Kaffee (3), die zur Abgabe des in der Einwegkapsel enthaltenen Kaffeepulvers konfiguriert ist, um es in einen Zubereitungsbehälter (2) für türkischen Kaffee zu bringen, in dem das Mischen mit dem Wasser stattfindet, wobei die Kapsel das Kaffeepulver (1) enthält und Folgendes umfasst:
- ein feststehendes Kastenteil (11), das eine zumindest teilweise offene Fläche (21) aufweist; **dadurch gekennzeichnet, dass** sie ferner Folgendes umfasst:
- ein drehendes Teil (13,23,33,43,53,63,73), das drehbar durch einen Stift (17) um eine Drehachse (28) in Bezug auf das feststehende Kastenteil (11) angeordnet ist,
wobei das feststehende Teil (11) und das drehende Teil (13,23,33,43,53,63,73) aneinander zum Definieren einer Kammer (19) des Kaffeepulvers (1) montiert sind,
wobei das drehende Teil (13,23,33,43,53,63,73) eine Schiebefläche (13") aufweist, die außerhalb des feststehenden Kastenteils (11) freigelegt ist,
wobei das drehende Teil (13,23,33,43,53,63,73) derart angeordnet ist, dass es sich folgendermaßen bewegt:
- von einer geschlossenen Stellung, bei der die Kammer (19) geschlossen ist;
- zu einer offenen Stellung, bei der die Kammer (19) eine Öffnung (27) in Richtung der Außenseite der Kaffee-Einwegkapsel (10,20,30,40,40',50,60,70) an der zumindest teilweise offenen Fläche (21) des feststehenden Kastenteils (11) bildet,
wobei sich ein Vorsprung (12) von einer Außenfläche des feststehenden Kastenteils aus erstreckt, wobei der Vorsprung konfiguriert ist, um mit einem Anschlag (174) eines Gehäuses (100) der Vorrichtung (170,170') in Eingriff zu kommen, die konfiguriert ist, um das feststehende Kastenteil (11) aufzunehmen, derart, dass ein auf das drehende Teil (13,23,33,43,53,63,73) durch die Schiebefläche (13") ausgeübter Druck bewirkt, dass sich das drehende Teil (13,23,33,43,53,63,73) in Bezug auf das feststehende Kastenteil (11) von der geschlossenen Stellung zur offenen Stellung dreht, wobei das feststehende Kastenteil (11) im Inneren des Gehäuses (100) blockiert bleibt.

2. Einwegkapsel (10,20,30,40,40',50,60,70) nach Anspruch 1, wobei der Vorsprung ein Flanschelement (12) umfasst.

3. Einwegkapsel (10,20,30,40,40',50,60,70) nach Anspruch 2, wobei das Flanschelement (12) um einen Endteil (11") des feststehenden Kastenteils (11) an der zumindest teilweise offenen Fläche (21) der Einwegkapsel (10,20,30,40,40',50,60,70) angeordnet ist.

4. Einwegkapsel (10,20,30,40,40',50,60,70) nach Anspruch 1, umfassend ein entfernbares Element (15), das angeordnet ist, um von der Einwegkapsel (10,20,30,40,40',50,60,70) unter einem in der gleichen Richtung wie der Druck ausgeübten Schub entfernt zu werden, so dass eine Aussparung (18) in der Einwegkapsel (10,20,30,40,40',50,60,70) gebildet wird, wenn das entfernbare Element (15) von der Einwegkapsel (10,20,30,40,40',50,60,70) entfernt wird, wobei die Aussparung (18) konfiguriert ist, um als Anzeichen einer vorherigen Benutzung der Einwegkapsel (10,20,30,40,40',50,60,70) zu dienen und jegliche Wiederbenutzung der Einwegkapsel (10,20,30,40,40',50,60,70) zu vermeiden.

5. Einwegkapsel (10,20,30,40,40',50,60,70) nach Anspruch 4, wobei das entfernbare Element (15) in einem weiteren Flanschelement (14) der Einwegkapsel (10,20,30,40,40',50,60,70) hergestellt ist, das sich von dem feststehenden Kastenteil (11) aus an einem ersten radialen Teil (13',23',33',43',53') erstreckt, wenn das drehende Teil (13,23,33,43,53,63,73) in der geschlossenen Stellung angeordnet ist.

6. Einwegkapsel (20,30,60) nach Anspruch 1, wobei das feststehende Kastenteil (11) ein öffenbares Element (26), insbesondere ein zerbrechliches Membranelement (26), umfasst, das angeordnet ist, um die zumindest teilweise offene Fläche (21) des feststehenden Kastenteils (11) abzudichten.

7. Einwegkapsel (20,30,40,40',60) nach Anspruch 1, wobei das drehende Teil (23,33,43,63) ein Glied umfasst, das ausgewählt ist aus der Gruppe bestehend aus:
- einem radialen Glied (23',33',43'), das sich von der Drehachse (28) zu einer Innenseite (11') des feststehenden Kastenteils (11) erstreckt, die der Drehachse (28) gegenüberliegt;
- mindestens einem Seitenglied (34), das sich von dem radialen Glied (33',43'), insbesondere zwei Seitenglieder (34), aus parallel zu einer Seitenfläche des feststehenden Kastenteils (11) erstreckt;
- einer Kombination aus dem radialem Glied (43') und dem oder der Seitenglied oder -glieder (43),
insbesondere wobei sich eine Mittelwand (34') von dem radialen Glied (43') aus erstreckt, um das Innere des feststehenden Kastenabschnitts (11) in zwei unterschiedliche Kammern (19',19") aufzuteilen,
insbesondere wobei das drehende Teil (33) ein ausgeschnittenes Element (51) umfasst, das konfiguriert ist, um gegen das offenbare Element (26) zu schieben und dieses zu schneiden, wenn der Druck auf das drehende Teil (33) ausgeübt wird,
insbesondere wobei das ausgeschnittene Element (51) mit dem mindestens einen Seitenglied (34) einstückig ist.

8. Einwegkapsel (40,40',60) nach Anspruch 1, wobei das drehende Teil einen Behälter (43,63) umfasst, das drehbar in dichtem Eingriff im Inneren des feststehenden Kastenteils (11) angeordnet ist.

9. Einwegkapsel (40,40',60) nach Anspruch 7, wobei das radiale Glied des drehenden Teils (43,63) ein erstes radiales Glied (43') ist und
das drehende Teil (43) zwei Seitenglieder (34) umfasst, und
das drehende Teil (43) ein zweites radiales Glied (46) umfasst,
wobei das erste und das zweite radiale Glied (43',46) und die zwei Seitenglieder (34) eine drehbare Kammer im Inneren des feststehenden Kastenteils (11) definieren.

10. Einwegkapsel (50) nach Anspruch 1, wobei das drehende Teil (53) ein Schließglied (56) umfasst, das konfiguriert ist, um die zumindest teilweise offene Fläche (21) des feststehenden Kastenteils (11) abzudichten, wobei das Schließglied (56) angeordnet ist, um die zumindest teilweise offene Fläche (21) abzudichten, wenn das drehende Teil in der geschlossenen Stellung ist.

11. Einwegkapsel (50) nach Anspruch 10, wobei die Schiebefläche (13") an einem Ende eines Schiebeelements (55) angeordnet ist, das sich von einer Verlängerungsseite (57) des Schließglieds (56) aus seitlich in Bezug auf das feststehende Kastenteil (11) erstreckt.

12. Einwegkapsel (60) nach Anspruch 1, wobei das feststehende Kastenteil (11) ein Fach (61) umfasst, das eine Einfüllöffnung (64) und eine Abdeckung (62), die konfiguriert ist, um die Einfüllöffnung (64) dicht zu blockieren, aufweist.
insbesondere wobei die Einfüllöffnung (64) an einer Fläche des Fachs (61) hergestellt ist, die der zumindest teilweise offenen Fläche (21) des feststehenden Kastenteils (11) gegenüberliegt, wobei das Fach (61) und die Abdeckung (62) jeweilige ebene Eingriffselemente (61',62';61",62") umfassen, die gegenseitig angeordnet sind, um in Bezug zueinander zu gleiten, und die sich von einer Seite der zumindest teilweise offenen Fläche (21) aus erstrecken, und wobei die Abdeckung (62) einen gekrümmten Teil (62"') umfasst, der gleitend mit dem drehenden Teil (63) im Eingriff ist,
insbesondere wobei das Fach (61) und die Abdeckung (62) gegenseitig eingreifende Schnappschlosselemente (66,67) umfassen.

13. Einwegkapsel (70) nach Anspruch 1, wobei
das drehende Teil (73) ein Becher ist und die Kammer (19) vollständig im Inneren des Bechers (73) definiert ist, wobei der Becher (74) eine Öffnung mit einer Kante (74) in einem vorbestimmten Abstand von der Drehachse (28) aufweist, und wobei die Einwegkapsel (70) eine Membran (76) umfasst, die Folgendes umfasst:
- einen feststehenden Rahmenteil (76'), der an einem Rahmenbefestigungsteil (71) des feststehenden Kastenteils (11) neben einer Seite der Kante (74) angeklebt ist, und
- einen Schließteil (76"), der ununterbrochen an der Kante (74) angeklebt ist, um den Becher (73) abzudichten.

14. System zur Zubereitung von türkischem Kaffee (3), umfassend:
- eine Einzeldosis-Kaffee-Einwegkapsel (10,20,30,40,40',50,60,70), die zur Zubereitung von türkischem Kaffee (3) konfiguriert ist, wobei die Kapsel Kaffeepulver (1) enthält und die Kapsel Folgendes umfasst:
- ein feststehendes Kastenteil (11), das eine zumindest teilweise offene Fläche (21) aufweist;
wobei das System ferner Folgendes umfasst:
- eine Vorrichtung (170,170'), die zur Abgabe des in der Einwegkapsel enthaltenen Kaffeepulvers konfiguriert ist, um es in einen Zubereitungsbehälter (2) für türkischen Kaffee zu bringen, in dem das Mischen mit dem Wasser durch Öffnen der Einwegkapsel (10,20,30,40,40',50,60,70) stattfindet, umfassend:
- einen Kasten (171), der eine Ablassöffnung (173) für das Kaffeepulver (1) aufweist;
wobei das System **dadurch gekennzeichnet ist, dass** die Kapsel ferner Folgendes umfasst:
- ein drehendes Teil (13,23,33,43,53,63,73), das drehbar durch einen Stift (17) um eine Drehachse (28) in Bezug auf das feststehende Kastenteil (11) angeordnet ist,
wobei das feststehende Kastenteil (11) und das drehende Teil (13,23,33,43,53,63,73) aneinander zum Definieren einer Kammer (19) des Kaffeepulvers (1) montiert sind,
wobei das drehende Teil (13,23,33,43,53,63,73) eine Schiebefläche (13") aufweist, die außerhalb des feststehenden Kastenteils (11) freigelegt ist,
wobei das drehende Teil (13,23,33,43,53,63,73) derart angeordnet ist, dass es sich folgendermaßen bewegt:
- von einer geschlossenen Stellung, bei der die Kammer (19) geschlossen ist,
- zu einer offenen Stellung, bei der die Kammer (19) eine Öffnung (27) in Richtung der Außenseite der Kaffee-Einwegkapsel (10,20,30,40,40',50,60,70) an der zumindest teilweise offenen Fläche (21) des feststehenden Kastenteils (11) bildet,
**und dass** die Vorrichtung ferner Folgendes umfasst:
- ein drehbares Stellglied (175), das drehbar in Bezug auf den Kasten (171) angeordnet ist und ein Manövrierteil (176) außerhalb des Kastens (171) und ein Schiebeteil (177) im Inneren des Kastens, die miteinander einstückig sind, umfasst,
wobei der Kasten (171) konfiguriert ist, um die Einwegkapsel (10,20,30,40,40',50,60,70) aufzunehmen, wobei die Drehachse (28) einstückig mit dem Kasten (171) ist,
wobei **die** Kapsel und die Vorrichtung eine Einrichtung für den gegenseitigen Eingriff zum Eingriff der Kapsel im Inneren des Kastens umfassen, wobei die Einrichtung für den gegenseitigen Eingriff Folgendes umfasst:
- einen Vorsprung (12), der von einer Außenfläche des feststehenden Kastens (11) der Einwegkapsel (10,20,30,40,40',50) hervorsteht;
- einen Anschlag (174) im Inneren des Kastens (171), der konfiguriert ist, um mit dem Vorsprung (12) in Eingriff zu kommen, um die Einwegkapsel bewegungslos im Inneren des Kastens (171) in Bezug auf eine Zuführrichtung zu halten,
- derart, dass eine auf das drehende Teil (13,23,33,43,53,63,73) durch das Manövrierteil (176) und das Schiebeteil (177), und durch die Schiebefläche (13"), ausgeübte Kraft bewirkt, dass sich das drehende Teil (13,23,33,43,53,63,73) in Bezug auf das feststehende Kastenteil (11) von der geschlossenen Stellung zur offenen Stellung dreht, wobei das feststehende Kastenteil (11) in einer Stellung im Inneren des Kastens (171) blockiert bleibt.

15. System nach Anspruch 14, wobei:
- die Einwegkapsel ein entfernbares Element (15) umfasst, das angeordnet ist, um von der Einwegkapsel (10,20,30,40,40',50,60,70) unter einem in einer Richtung der Kraft ausgeübten Schub entfernt zu werden, so dass eine Aussparung (18) in der Einwegkapsel (10,20,30,40,40',50,60,70) gebildet wird, wenn das entfernbare Element (15) entfernt wird, und
- die Vorrichtung (170,170') einen Bruchzahn (179) umfasst, der angeordnet ist, um den Schub auf das entfernbare Element (15) auszuüben, wenn bewirkt wird, dass sich das drehbare Stellglied (175) dreht, um das entfernbare Element (15) von der Einwegkapsel (10,20,30,40,40',50) zu öffnen, umfassend des Weiteren:
- einen Sensor (53), der konfiguriert ist, um das Vorhandensein/Nicht-Vorhandensein des entfernbaren Elements (15) in der Einwegkapsel (10,20,30,40,40',50,60,70) zu erkennen und ein Unbenutzte-Kapsel-Signal der Einwegkapsel (10,20,30,40,40',50,60,70) zu erzeugen, wenn das entfernbare Element (15) vorhanden ist;
- eine Logikeinrichtung (54), die konfiguriert ist, um das Unbenutzte-Kapsel-Signal zu empfangen und einen Schritt des Fortfahrens der Zubereitung des türkischen Kaffees (3) bei Vorhandensein/Nicht-Vorhandensein des Unbenutzte-Kapsel-Signals zu aktivieren/deaktivieren.

## Revendications

1. Capsule jetable de café à dose unique (10,20,30,40,40',50,60,70), pour préparer un café turc (3) dans un dispositif d'alimentation (170, 170') en café turc (3) configuré pour libérer la poudre de café contenue dans ladite capsule jetable, afin de l'amener dans un récipient de préparation de café turc (2) où se produit le mélange avec l'eau, ladite capsule contenant ladite poudre de café (1) et comprenant :
- une partie formant une boîte fixe (11) ayant une face au moins partiellement ouverte (21) ;
**caractérisée en ce qu'**elle comprend en outre :
- une partie rotative (13,23,33,43,53,63,73) agencée en rotation par un axe (17) autour d'un axe de rotation (28) par rapport à ladite partie formant une boîte fixe (11),
ladite partie formant une boîte fixe (11) et ladite partie rotative (13,23,33,43,53,63,73) étant montées l'une sur l'autre pour définir une chambre (19) de ladite poudre de café (1),
dans laquelle ladite partie rotative (13,23,33,43,53,63,73) a une surface de poussée (13") exposée à l'extérieur de ladite partie formant une boîte fixe (11),
ladite partie rotative (13,23,33,43,53,63,73) étant agencée de manière à se déplacer :
- d'une position fermée, dans laquelle ladite chambre (19) est fermée ;
- à une position ouverte, dans laquelle ladite chambre (19) forme une ouverture (27) vers l'extérieur de ladite capsule jetable de café (10,20,30,40,40',50,60,70) à ladite face au moins partiellement ouverte (21) de ladite partie formant une boîte fixe (11),
dans laquelle une saillie (12) s'étend à partir d'une surface extérieure de ladite partie formant une boîte fixe, ladite saillie étant configurée pour s'engager avec une butée (174) d'un logement (100) dudit dispositif (170,170') configuré pour recevoir ladite partie formant une boîte fixe (11), de telle manière qu'une pression exercée sur ladite partie rotative (13,23,33,43,53,63,73) par l'intermédiaire de ladite surface de poussée (13") fasse pivoter ladite partie rotative (13,23,33,43,53,63,73) par rapport à ladite partie formant une boîte fixe (11) de ladite position fermée à ladite position ouverte, ladite partie formant une boîte fixe (11) restant bloquée à l'intérieur dudit logement (100).

2. Capsule jetable (10,20,30,40,40',50,60,70) selon la revendication 1, dans laquelle ladite saillie comprend un élément formant une bride (12).

3. Capsule jetable (10,20,30,40,40',50,60,70) selon la revendication 2, dans laquelle ledit élément formant bride (12) est agencé autour d'une partie d'extrémité (11") de ladite partie formant une boîte fixe (11) à la face au moins partiellement ouverte (21) de ladite capsule jetable (10,20,30,40,40',50,60,70).

4. Capsule jetable (10,20,30,40,40',50,60,70) selon la revendication 1, comprenant un élément amovible (15) agencé pour être retiré de ladite capsule jetable (10,20,30,40,40',50,60,70) sous une poussée exercée dans la même direction que ladite pression, de sorte qu'un évidement (18) soit formé dans ladite capsule jetable (10,20,30,40,40',50,60,70) lorsque ledit élément amovible (15) est retiré de ladite capsule jetable (10,20,30,40,40',50,60,70), ledit évidement (18) étant configuré pour servir de signal d'une utilisation précédente de ladite capsule jetable (10,20,30,40,40',50,60,70) et éviter une réutilisation de ladite capsule jetable (10,20,30,40,40',50,60,70).

5. Capsule jetable (10,20,30,40,40',50,60,70) selon la revendication 4, dans laquelle ledit élément amovible (15) est réalisé dans un autre élément formant bride (14) de ladite capsule jetable (10,20,30,40,40',50,60,70) s'étendant de ladite partie formant une boîte fixe (11) à une première partie radiale (13',23',33',43',53') lorsque ladite partie rotative (13,23,33,43,53,63,73) est agencée dans ladite position fermée.

6. Capsule jetable (20,30,60) selon la revendication 1, dans laquelle ladite partie formant une boîte fixe (11) comprend un élément ouvrable (26), en particulier un élément à membrane frangible (26), agencé pour sceller ladite face au moins partiellement ouverte (21) de ladite partie formant une boîte fixe (11).

7. Capsule jetable (20,30,40,40',60) selon la revendication 1, dans laquelle ladite partie rotative (23,33,43,63) comprend un élément sélectionné dans le groupe constitué de :
- un élément radial (23',33',43') s'étendant dudit axe de rotation (28) à une face intérieure (11') de ladite partie formant une boîte fixe (11) opposée à l'axe de rotation (28) ;
- au moins un élément latéral (34) s'étendant dudit élément radial (33',43'), en particulier deux éléments latéraux (34), parallèles à une surface latérale de ladite partie formant une boîte fixe (11) ;
- une combinaison dudit élément radial (43') et dudit ou desdits éléments latéraux (43), en particulier, une paroi centrale (34') s'étend dudit élément radial (43'), de manière à diviser l'intérieur de ladite partie formant une boîte fixe (11) en deux chambres distinctes (19',19"),
en particulier, ladite partie rotative (33) comprend un élément coupé (51) configuré pour pousser contre ledit élément ouvrable (26) et le couper lorsque ladite pression est exercée sur ladite partie rotative (33),
en particulier, ledit élément coupé (51) fait partie intégrante dudit ou desdits éléments latéraux (34).

8. Capsule jetable (40,40',60) selon la revendication 1, dans laquelle ladite partie rotative comprend un récipient (43,63) agencé en rotation en engagement serré avec ladite partie formant une boîte fixe (11).

9. Capsule jetable (40,40',60) selon la revendication 7, dans laquelle ledit élément radial de ladite partie rotative (43,63) est un premier élément radial (43') et
ladite partie rotative (43) comprend deux desdits éléments latéraux (34), et ladite partie rotative (43) comprend un deuxième élément radial (46), lesdits premier et deuxième éléments radiaux (43',46) et lesdits deux éléments latéraux (34) définissent une chambre rotative à l'intérieur de ladite partie formant une boîte fixe (11).

10. Capsule jetable (50) selon la revendication 1, dans laquelle ladite partie rotative (53) comprend un élément de fermeture (56) configuré pour sceller ladite face au moins partiellement ouverte (21) de ladite partie formant une boîte fixe (11), dans laquelle ledit élément de fermeture (56) est agencé pour sceller ladite face au moins partiellement ouverte (21) lorsque ladite partie rotative est dans ladite position fermée.

11. Capsule jetable (50) selon la revendication 10, dans laquelle ladite surface de poussée (13") est agencée à une extrémité d'un élément de poussée (55) qui s'étend d'un côté d'extension (57) dudit élément de fermeture (56) latéralement par rapport à ladite partie formant une boîte fixe (11).

12. Capsule jetable (60) selon la revendication 1, dans laquelle ladite partie formant une boîte fixe (11) comprend un compartiment (61) ayant une ouverture de remplissage (64) et un couvercle (62) configuré pour obturer hermétiquement ladite ouverture de remplissage (64),
en particulier, ladite ouverture de remplissage (64) est réalisée sur une face dudit compartiment (61) opposée à ladite face au moins partiellement ouverte (21) de ladite partie formant une boîte fixe (11), dans laquelle ledit compartiment (61) et ledit couvercle (62) comprennent des éléments d'engagement plans respectifs (61',62'; 61",62") qui sont mutuellement agencés pour glisser l'un par rapport à l'autre et qui s'étendent d'un côté de ladite face au moins partiellement ouverte (21), et ledit couvercle (62) comprend une partie courbe (62"') engagée de manière coulissante avec ladite partie rotative (63),
en particulier, ledit compartiment (61) et ledit couvercle (62) comprennent des éléments qui s'engagent mutuellement par enclenchement (66,67).

13. Capsule (70) selon la revendication 1, dans laquelle
ladite partie rotative (73) est une cuvette et ladite chambre (19) est complètement définie à l'intérieur de ladite cuvette (73), ladite cuvette (74) ayant une ouverture avec un bord (74) à une distance prédéterminée dudit axe de rotation (28), et ladite capsule jetable (70) comprend une membrane (76) comportant :
- une partie formant un cadre fixe (76') collée sur une partie de fixation de cadre (71) de ladite partie formant une boîte fixe (11) contiguë à un côté dudit bord (74), et
- une partie de fermeture (76") collée de manière continue sur ledit bord (74), de manière à sceller ladite cuvette (73).

14. Système pour préparer un café turc (3), comprenant :
- une capsule jetable de café pour dose unique (10,20,30,40,40',50,60,70), configurée pour préparer un café turc (3), ladite capsule contenant de la poudre de café (1) et ladite capsule comprenant :
- une partie formant une boîte fixe (11) ayant une face au moins partiellement ouverte (21) ;
ledit système comprenant en outre
- un dispositif (170,170') configuré pour libérer la poudre de café contenue dans ladite capsule jetable, afin de l'amener dans un récipient de préparation de café turc (2) où a lieu le mélange avec l'eau par ouverture de la capsule jetable (10,20,30,40,40',50,60,70), comprenant :
- une boîte (171) ayant une ouverture de décharge (173) pour ladite poudre de café (1) ;
ledit système étant **caractérisé en ce que** ladite capsule comprend en outre
- une partie rotative (13,23,33,43,53,63,73) agencée en rotation par un axe (17) autour d'un axe de rotation (28) par rapport à ladite partie formant une boîte fixe (11),
dans lequel ladite partie formant une boîte fixe (11) et ladite partie rotative (13,23,33,43,53,63,73) sont montées l'une sur l'autre pour définir une chambre (19) de ladite poudre de café (1),
dans lequel ladite partie rotative (13,23,33,43,53,63,73) a une surface de poussée (13") exposée à l'extérieur de ladite partie formant une boîte fixe (11),
dans lequel ladite partie rotative (13,23,33,43,53,63,73) est agencée de manière à se déplacer :
- d'une position fermée, dans laquelle ladite chambre (19) est fermée,
- à une position ouverte, dans laquelle ladite chambre (19) forme une ouverture (27) vers l'extérieur de ladite capsule jetable de café (10,20,30,40,40',50,60,70) à ladite ou auxdites faces au moins partiellement ouvertes (21) de ladite partie formant une boîte fixe (11),
**et en ce que** ledit dispositif comprend en outre
- un actionneur pivotant (175) agencé de manière rotative par rapport à ladite boîte (171) et comprenant une partie de manœuvre (176) à l'extérieur de ladite boîte (171) et une partie de poussée (177) à l'intérieur de ladite boîte, intégrées l'une à l'autre,
dans lequel ladite boîte (171) est configurée pour recevoir ladite capsule jetable (10,20,30,40,40',50,60,70) avec ledit axe de rotation (28) intégré à ladite boîte (171),
dans lequel **ladite** capsule et ledit dispositif comprennent un moyen d'engagement mutuel pour engager ladite capsule à l'intérieur de ladite boîte, ledit moyen d'engagement mutuel comprenant :
- une saillie (12) dépassant d'une surface extérieure de ladite partie formant une boîte fixe (11) de ladite capsule jetable (10,20,30,40,40',50) ;
- une butée (174) à l'intérieur de ladite boîte (171), configurée pour s'engager avec ladite saillie (12), de manière à immobiliser ladite capsule jetable à l'intérieur de ladite boîte (171) par rapport à une direction d'alimentation, de telle sorte qu'une force exercée sur ladite partie rotative (13,23,33,43,53,63,73) par l'intermédiaire de ladite partie de manœuvre (176) et ladite partie de poussée (177), et par l'intermédiaire de ladite surface de poussée (13"), fait pivoter ladite partie rotative (13,23,33,43,53,63,73) par rapport à ladite partie formant une boîte fixe (11) de ladite position fermée à ladite position ouverte, ladite partie formant une boîte fixe (11) restant bloquée dans une position à l'intérieur de ladite boîte (171).

15. Système selon la revendication 14, dans lequel :
- ladite capsule jetable comprend un élément amovible (15) agencé pour être retiré de ladite capsule jetable (10,20,30,40,40',50,60,70) sous une poussée exercée dans une direction de ladite force, de telle sorte qu'un évidement (18) soit formé dans ladite capsule jetable (10,20,30,40,40',50,60,70) lorsque ledit élément amovible (15) est retiré, et
- ledit dispositif (170,170') comprend une dent de rupture (179) agencée pour exercer ladite poussée sur ledit élément amovible (15) lorsque ledit actionneur rotatif (175) est forcé de tourner afin d'ouvrir ledit élément amovible (15) de ladite capsule jetable (10,20,30,40,40',50),
comprenant en outre :
- un capteur (53) configuré pour détecter la présence/absence dudit élément amovible (15) dans ladite capsule jetable (10,20,30,40,40',50,60,70) et pour générer un signal de capsule inutilisée de ladite capsule jetable (10,20,30,40,40',50,60,70) si ledit élément amovible (15) est présent ;
- un moyen logique (54) configuré pour recevoir ledit signal de capsule inutilisée et pour activer/désactiver une étape de poursuite de ladite préparation dudit café turc (3) en présence/absence dudit signal de capsule inutilisée.
